(19) Europäisches Patentamt
European Patent Office
Office européen des brevets

(11) **EP 1 870 250 A1**

(12) **EUROPÄISCHE PATENTANMELDUNG**

(43) Veröffentlichungstag:
**26.12.2007 Patentblatt 2007/52**

(51) Int Cl.:
***B41M 5/50*** *(2006.01)* ***G03G 7/00*** *(2006.01)*
***C08L 89/06*** *(2006.01)*

(21) Anmeldenummer: **06012809.7**

(22) Anmeldetag: **22.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Celfa AG**
**6423 Seewen (CH)**

(72) Erfinder:
- **Varescon, Francois**
  **6440 Brunnen (CH)**
- **Schuler, Philipp**
  **6443 Morschach (CH)**

(74) Vertreter: **Blum, Rudolf Emil et al**
**E. BLUM & CO. AG**
**Patent- und Markenanwälte VSP**
**Vorderberg 11**
**8044 Zürich (CH)**

(54) **Grundschicht zur Erhöhung der Flüssigkeitsaufnahmekapazität eines mehrschichtigen Materials**

(57) Beschrieben wird eine insbesondere als Grundschicht in einem Mehrschichtmaterial geeignete Zusammensetzung für ein Farbaufnahmematerial umfassend
(i) mindestens 50 Gew.-% Gelatine, und gegebenenfalls die Differenz zu 100 Gew.-% eines anderen hydrophilen Bindemittels.
(ii) mindestens einen Vernetzer der Formel

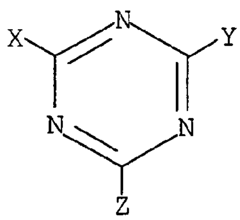

(I)

und/oder

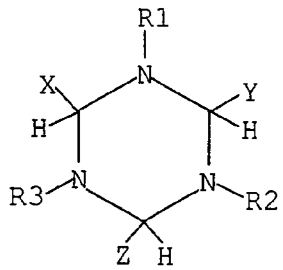

(II)

worin
X, Y, und Z unabhängig von einander Wasserstoff, Alkyl, Phenyl, Benzyl, Carboxyl, Alkoxy, Amido, Amino, Carbonyl, Alkoxycarbonylamino, Halogenid oder -OM bedeuten, worin M ein Alkalimetall ist, und worin
R1, R2, R3 unabhängig von einander Alkyl, Phenyl, Benzyl, Carboxyl, Carbonyl, Amido, Amino oder Alkoxycarbonylamino bedeuten, und
(iii) Wasser.

EP 1 870 250 A1

## Beschreibung

Die vorliegende Erfindung betrifft eine Zusammensetzung, die geeignet ist, in Schichtform auf einen Träger, insbesondere Papier, Folie, oder Textilien, aufgetragen zu werden. Eine solche Zusammensetzung, in Schichtform aufgetragen und getrocknet, zeichnet sich durch eine hohe Flüssigkeitsaufnahmekapazität aus und ist speziell für die Verwendung als Grundschicht in einem mehrschichtigen Material geeignet.

Zusammensetzungen für quellbare Aufnahmeschichten auf Basis von Bindemitteln, wie Gelatine, Polyvinylalkohol und Polyvinylpyrrolidon, zur Aufnahme wasserbasierter Farbflüssigkeiten sind bekannt und z.B. in EP 1 060 901 A2 beschrieben. Solche Aufnahmeschichten zeigen hohen Glanz und hohe Farbflüssigkeitsaufnahmekapazität. Sie haben jedoch den Nachteil, dass die Farbstoffe an der Oberfläche der Schicht oft unregelmässig verteilt werden, was zu Schwankungen der Farbdichte, bezeichnet als Beading, führt. Weiterer Nachteil ist die lange Trocknungszeit frischer Ausdrucke, die z.B. bei Stapeldruck zum Farbübertrag auf die Rückseite des darüber liegenden Blattes führt. Ferner zeigen auf solche Materialien aufgebrachte Bilder hohe Anfälligkeit für Verlaufen der Farben infolge von Wasserzutritt in die Schicht. Diese Nachteile sind durch die quellbaren Systeme und ihr physikalisches Verhalten bedingt.

Ebenfalls bekannt sind Zusammensetzung für poröse Aufnahmeschichten, die hoch gefüllt sind mit traditionellen anorganischen und/oder organischen Füllstoffen und/oder Pigmenten. Diese Schichten haben einen Feststoffauftrag von über 35 - 45 g/m$^2$, eine gute Wasserfestigkeit im Vergleich zu quellbaren Systemen und eine hohe Farbflüssigkeitsaufnahmekapazität, die zu kurzen Trocknungszeiten von darauf applizierten lösungsmittelhaltigen Farben führt. Solche Schichten zeigen aber eine schlechte Dimensionsstabilität (Curl, Cockling), die bei Verwendung von Blättern mit einer solchen Schicht in Drückgeräten mit Einzug zu Problemen beim Einzug der Blätter in solche Druckgeräte führen kann. Ein weiteres Problem ist die Tendenz solcher Zusammensetzungen zur Ausbildung rissiger Oberflächenstrukturen als Folge der Trocknung bei der Herstellung des beschichteten Materials. Durch Reduzierung des Feststoffauftrags unter 30 - 25 g/m$^2$ lassen sich die vorher erwähnten Probleme vermindern oder sogar eliminieren, aber die Schicht ist zu dünn, um die Anforderungen vieler Druckgeräte in Bezug auf Tintenaufnahmevermögen und Trocknungszeit zu erfüllen. Ein weiterer Nachteil solcher poröser Systeme ist deren niedrigerer Glanzwert, der durch die Porengrösse der Schicht bestimmt wird. Solche Zusammensetzungen eignen sich deshalb nur für matte Oberflächen.

Weiter bekannt sind Zusammensetzungen, die auf die Erhöhung der Porosität der Schicht abzielen. Entsprechende Zusammensetzungen sind in EP 1 295 923 B1 offenbart. Diese tragen stark zur schnellen Trocknung und zu hohem Glanz bei, aber die resultierende Kohäsion der Schicht ist oft schwach bis mangelhaft.

Alternativ wurde ein mehrschichtiges System vorgeschlagen mit einem Aufbau umfassend mindestens eine lösungsmittelabsorbierende Schicht (quellbare Schicht) und über dieser Schicht mindestens eine sofort trocknende tintenfixierende Schicht (poröse Aufnahmeschicht). Ein solcher Aufbau erlaubt eine Erhöhung der Flüssigkeitsaufnahmekapazität, aber infolge unzureichender Vernetzung der quellbaren Schicht bilden sich Risse an der Oberfläche der porösen Schicht. Eine vollständige Eliminierung der Risse lässt sich durch höhere Vernetzung der quellbaren Schicht mittels Glutardialdehyd, oder Formaldehyd erzielen, aber auf Kosten der Flüssigkeitsaufnahmekapazität des mehrschichtigen Systems, die markant erniedrigt wird, und Erhöhung des Feststoffauftrags auf über 35 -45 g/m$^2$. Als Nachteil erwiesen sich auch die Alterungseigenschaften, da die Flüssigkeitsaufnahmekapazität mit der Zeit abnimmt.

Aufgabe der Erfindung war es deshalb eine Zusammensetzung bereitzustellen, die für eine Grundschicht in einem mehrschichtigen Material geeignet ist, und die sich - in Schichtform aufgetragen und getrocknet - auszeichnet durch

- eine hohe Flüssigkeitsaufnahmekapazität
- eine hochglänzende Oberfläche und
- eine niedrige optische Dichte.

In Kombination mit einer hoch porösen Deckschicht soll die Grundschicht bei niedriger Gesamtschichtdicke sehr kurze Trocknungszeiten und schnelles Einziehen einer auf die Deckschicht aufgebrachten Flüssigkeit von der Oberfläche her in die Grundschicht gestatten.

Insbesondere soll durch diese Grundschicht auch die gute Verarbeitbarkeit auf Druckgeräten sichergestellt werden.

Diese Aufgabe wurde gelöst durch das Farbaufnahmematerial gemäss Anspruch 1. Spezielle Ausführungsformen sind den abhängigen Ansprüchen zu entnehmen.

Überraschend wurde nämlich gefunden, das eine Zusammensetzung einer Grundschicht, die

(i) mindestens 50 Gew.-% Gelatine, und gegebenenfalls die Differenz zu 100 Gew.-% eines anderen hydrophilen Materials ausgewählt aus einem oder mehreren Bindemittel(n) mit Hydroxylgruppen und/oder Carboxylgruppen und/oder Aminogruppen und/oder Estergruppen und/oder Ketogruppen und/oder Amidogruppen in Seitenketten,
(ii) mindestens einen Vernetzer der Formel (I)

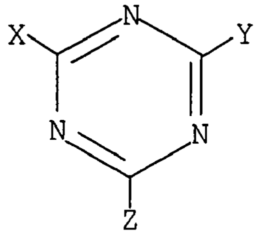

(I)

worin
X, Y, und Z unabhängig von einander Wasserstoff, einen Alkylrest, einen Phenylrest, einen Benzylrest, eine Carboxylgruppe, eine Alkoxygruppe, eine Amidogruppe, eine Aminogruppe, eine Carbonylgruppe, eine Alkoxycarbonylaminogruppe (-NH-COOR, mit R z.B Methyl, n-Butyl), ein Halogenid (insbesondere Cl, Br), oder -OM bedeuten, worin M ein Alkalimetall ist, bei X=Y=Cl oder Br und Z=OM insbesondere Na oder K,
und/oder
mindestens einen Vernetzer der Formel (II)

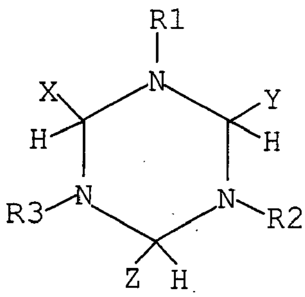

(II)

worin
X, Y, und Z unabhängig von einander Wasserstoff, einen Alkylrest, einen Phenylrest, einen Benzylrest, eine Carboxylgruppe, eine Alkoxygruppe, eine Amidogruppe, eine Aminogruppe, eine Carbonylgruppe, eine Alkoxycarbonylaminogruppe (-NH-COOR, mit R z.B. Methyl, n-Butyl), ein Halogenid (insbesondere Cl, Br), oder -OM bedeuten, worin M ein Alkalimetall ist, insbesondere Na oder K, und worin
R1, R2, R3 unabhängig von einander einen Alkylrest, einen Phenylrest, einen Benzylrest, eine Carboxylgruppe, eine Carbonylgruppe, eine Amidogruppe, eine Aminogruppe oder eine Alkoxycarbonylaminogruppe bedeuten und
(iii) Wasser.

Vorzugsweise bedeuten R1, R2, R3 unabhängig von einander einen Alkylrest, einen Phenylrest, einen Benzylrest, eine Carboxylgruppe oder eine Carbonylgruppe.

Bevorzugte Vernetzer der Formel (I) sind solche mit X=Y=Cl oder Br und Z=ONa und/oder OK und speziell bevorzugt ist ein Vernetzer der Formel (I) mit X=Y=Cl und Z=ONa.

Bevorzugte Vernetzer der Formel (II) sind solche mit X=Y=Z=H und R1=R2=R3=-CO-C($CH_3$)=$CH_2$ und X=Y=Z=H und R1=R2=R3=-CO-CH=$CH_2$, speziell bevorzugt X=Y=Z=H und R1=R2=R3=-CO-CH=$CH_2$.

Mit den bevorzugten Triazinen der Formel (I) und (II) wurden bisher die besten Ergebnisse erreicht.

Die Gelatine macht vorzugsweise mindestens 70 Gew.-% des Gesamtbindemittels aus, speziell bevorzugt ca. 100 Gew.-%.

Vorzugsweise wird eine erfindungsgemässe Grundschicht zusammen mit einer sofort trocknenden tintenfixierenden Deckschicht, insbesondere einer porösen Aufnahmeschicht, verwendet, was insgesamt zu einer signifikant erhöhten Flüssigkeitsaufnahmekapazität im Vergleich mit bekannten Schichtaufbauten führt, wo sehr hohe Feststoffaufträge notwendig sind. Eine bevorzugte Deckschicht ist in EP 1 295 923 offenbart.

Die vorliegende Erfindung löst Probleme, die mit der hohen bisher notwendigen Auftragsmenge verbunden sind dadurch, dass die Grundschicht trotz hohen Vernetzungsgrades ein hohes Quellvermögen besitzt und dies ohne

innerhalb der darüber angeordneten sofort trocknenden tintenfixierenden Schicht starke Spannungen zu verursachen. Die Vernetzungsreaktion wird durch eine regulierte Trocknung der Grundschicht kontrolliert und gesteuert. Diese kann beispielsweise in einem Trocknungskanal bei Temperaturen im Bereich von 50°C bis 200°C während 1 bis 4 Minuten erfolgen.

Es liegt ebenfalls im Rahmen der vorliegenden Erfindung, den Vernetzern gemäss den Formeln (I) und/oder (II) ein Lösungsmittel ausgewählt aus der Gruppe umfassend, C1-C4-Alkohole, Glykole mit Siedepunkt <220°C, Glykolether mit Siedepunkten <220°C und Mischungen derselben zuzugeben. Die Lösungsmittel dienen zur Kontrolle der Vernetzungsreaktion. Es kann nach der Herstellung der Schicht ganz oder teilweise entfernt werden, vorzugsweise vollständig.

Bevorzugte Lösungsmittel sind Mischungen von Alkohol und Glykol und/oder Glykolether, insbesondere Mischungen aus n-Propanol und/oder Isopropanol mit Glykol, wie Propylenglykol oder Glykolether, wie Dowanol DPM (erhältlich von Dow Chemicals).

Das Verhältnis von Wasser zu Lösungsmittel (Alkohol, Glykol und Glykolether) liegt üblicherweise im Bereich von 10:1 bis 1:1, vorzugsweise im Bereich von 8:1 bis 3:2, speziell bevorzugt im Bereich von 6:1 bis 2:1 und das Verhältnis von Alkohol zu Glykol und/oder Glykolether liegt üblicherweise im Bereich von 8:1 bis 1:2, vorzugsweise im Bereich von 6:1 bis 1:1, speziell bevorzugt im Bereich von 4:1 bis 2:1.

Im Rahmen der vorliegenden Erfindung wird unter Gelatine unmodifizierte Gelatine verstanden, aber auch modifizierte Gelatine ausgewählt aus der Gruppe umfassend acetylierte Gelatine, phthalatierte Gelatine, oxidierte Gelatine und Mischungen derselben. Weitere hydrophile Bindeminttel sind z.B. Chitosan, Polyalkylenoxide, Casein, Polyvinylalkohole, teilveresterte Polyvinylalkohole, Vinylalkohol-Copolymeren, sulphonierte Polyester, teilweise hydrolysiertes Polyvinylacetat (enthält mind. 50 % Vinylalkoholgruppen, vorzugsweise mind. 80 %), Polyacrylsäure, Polyvinylpyrrolidon, Poly(natriumstyrolsulfonat), Poly(2-acrylamid-2-methansulfonsäure), Polyacrylamid und Mischungen derselben. Copolymere, aufgebaut aus Monomeren der oben angegebenen Polymere sowie Copolymere solcher Monomeren mit hydrophoben Monomeren sind ebenfalls verwendbar, sofern sie ausreichende Hydrophilie resp. Löslichkeit in Wasser aufweisen. Üblicherweise beträgt die Löslichkeit der Gelatine in Wasser bei 60°C von 5-60 g Gelatine pro 100 g Wasser, vorzugsweise 20-60 g Gelatine pro 100 g Wasser, speziell bevorzugt 40-60 g Gelatine pro 100 g Wasser und die Löslichkeit des Bindemittels bei 60°C mind. 10 g Bindemittel pro 100 g Wasser, vorzugsweise mind. 20 g Bindemittel pro 100 g Wasser.

Bevorzugtes hydrophiles Material ist Gelatine resp. eine als Bindemittel ausschliesslich unmodifizierte Gelatine enthaltende Zusammensetzung der Grundschicht. Bevorzugte Gelatine ist deionisierte, niedrigviskose Gelatine, insbesondere Gelatine mit einer Viskosität (10.0 Gew.-% in Wasser bei 60°C)von 1 bis 100 mPas, einem isoelektrischen Punkt IEP von 3.0 bis 11 und einem pH von 3.5 bis 8.0. Vorzugsweise hat die Gelatine eine Viskosität (10.0 Gew.-% in Wasser bei 60°C)von 1 bis 70 mPas, einen isoelektrischen Punkt (IEP) von 4.0 bis 10 und einem pH von 4.0 bis 7.0. Speziell bevorzugt hat die Gelatine eine Viskosität (10.0 Gew.-% in Wasser bei 60°C)von 1 bis 50 mPas, einen isoelektrischen Punkt (IEP) von 5.0 bis 9.5 und einen pH von 4.5 bis 6.0.

Zusätzlich können in der erfindungsgemässen Zusammensetzung weitere Bestandteile vorhanden sein. Diese sind insbesondere ausgewählt aus Polymeren wie Latex und/oder Polyurethan (PUR), Netzmitteln, Farbstoffen, Fixierungsmitteln, weiteren Vernetzungsmitteln, organischen Pigmenten, anorganischen Pigmenten, Beizmitteln, Stabilisatoren, z.B. NaOH, KOH, und beliebigen Kombinationen dieser weiteren Bestandteile.

Üblicherweise enthalten erfindungsgemässe Zusammensetzungen Feststoffe, insbesondere Bindemittel und gegebenenfalls Pigmente, in Gesamtmengen von ca. 1 bis 30 Gew.-%, vorzugsweise 3 bis 15 Gew.-%, speziell bevorzugt 5-12 Gew.-% und Wasser sowie gegebenenfalls Lösungsmitel in einer Menge von 99-70 Gew.-%, vorzugsweise 97-85 Gew.-% und speziell bevorzugt 5-12 Gew.-% derart, dass Gesamtfeststoff und Lösungsmittel 100 Gew.-% ergeben. Ferner enthaten die Zusammensetzungen Vernetzer in einer Menge von ca. 0.1 bis 400 mmol/100g Gelatine, vorzugsweise 1.0 bis 200 mmol/100g Gelatine, speziell bevorzugt 4.0 bis 100 mmol/100g Gelatine resp. 0.04 bis 160 mmol/ reaktive Gruppe des hydrophilen Bindemittels, vorzugsweise 0.4 bis 80 mmol/ reaktive Gruppe und speziell bevorzugt 1.8 bis 40 mmol/reaktive Gruppe. Vom Vernetzer müssen mindestens 80 mol-% erfindungsgemässe Vernetzer der Formel (I) und/oder (II) sein, resp. es dürfen maximal 20 mol-%, bezogen auf die Gesamtmenge an Vernetzern, andere Vernetzer enthalten sein.

Als Deckschicht eignet sich insbesondere eine hochporöse Schicht, wie sie im europäischen Patent Nr. EP 1 295 923 B1 beschrieben ist. In Kombination mit der beschriebene Deckschicht lassen sich, im Vergleich mit solchen Grundschichten, bei denen andere Vernetzerklassen eingesetzt werden, bei deutlich geringeren Gesamtschichtdicken bzw. mit deutlich geringerer Gesamtauftragsmenge auf den Träger resp. mit geringerem Gesamtfeststoffauftrag auf den Träger, sehr kurze Trocknungszeiten der Flüssigkeiten erreichen, die auf solche Schichten aufgetragen werden. Zudem lässt sich die Qualität der Beschichtung in Hinsicht auf Glanz und optische Dichte verbessern und rissige Oberflächenstrukturen als Folge der Schichtherstellung signifikant vermindern. Farbaufnahmematerialien, die mindesten eine erfindungsgemässe Grundschicht und einen Träger umfassen sind von dieser Erfindung miterfasst, bevorzugt ist aber die gleichzeitige Anwesenheit einer Deckschicht.

In einer auf der erfindungsgemässen Grundschicht aufgebrachten bevorzugten Deckschicht können die Verhältnisse von Füllstoff zu Bindemittel von 20:1 bis 1:1 variiert werden, insbesondere von 15:1 bis 1:1, der Glykolether ist vorzugsweise Propylenglykol, das Verhältnis von Lösungsmittel zu Propylenglykol ist 15:1 bis 3:2 und der Füllstoff enthält mind. 80 % Aluminiumoxidhydroxid Monohydrat mit Boehmitstruktur.

Die Erfindung betrifft insbesondere das Gebiet der Aufnahmeschichten für Farbflüssigkeiten mit erhöhten Anforderungen, die nicht nur im Tintenstrahldrucker im Privatbereich sondern auch im Rahmen von Druckbildaufzeichnungsverfahren (z.B. Offsetdruck, Tiefdruck, Hochdruck, Siebdruck, Tintenstrahldruck, Elektrofotografie mit Flüssigtoner resp. Trockentoner) zur Anwendung kommen. Solche Aufnahmeschichten tragende Materialien können z. B. als Masken bei der Herstellung der Offsetdruck- oder Siebdruckschablonen eingesetzt werden.

Ziel eines Drucks ist die Anpassung der Bildqualität des Ausdruckes an das Niveau der Silbersalzfotografie. An die verwendeten Aufzeichnungsmaterialien werden deshalb hohe Anforderungen gestellt. Hierzu gehören beispielsweise hohe Auflösung, hohe Farbdichte des erzeugten Bildes, kein Farbverlaufen ("bleeding"), sehr kurze Trocknungszeiten der Farbflüssigkeit, Lichtstabilität, Wasserfestigkeit, Brillanz, Dimensionsstabilität (Planlage), Glanz, Transparenz und niedrige optische Dichte.

Um derartige Eigenschaften zu bekommen, ist es nötig eine Aufnahmeschicht mit einer hohen Farbflüssigkeitsaufnahme herzustellen. Erfindungsgemäss wurde nun gefunden, dass bei Aufbringen einer erfindungsgemässen Grundschicht zwischen ein Substrat und eine Deckschicht eine sehr hohe Farbflüssigkeitsaufnahme erzielt werden kann. Durch die hohe Farbflüssigkeitsaufnahme verbessert sich die Auflösung wegen des verminderten Farbverlaufens und des schnellen Eindringens der Farbflüssigkeit in die Schicht. Kombiniert mit einer mikroporösen Deckschicht resultiert eine sehr hohe Farbflüssigkeitsaufnahmekapazität. Durch Einstellung einer gewünschten Farbflüssigkeitsaufnahmekapazität lässt sich die Auftragsmenge der Grund- und Deckschicht für den jeweiligen Zweck optimieren.

Bei einer Vernetzermenge von 5 mmol/100g bis 100 mmol /100 g hydrophilem Material (Gelatine und weitere hydrophile Bindemittel) lassen sich mit einer Auftragsmenge pro $m^2$ von ca. 3g bis ca. 15g, vorzugsweise von 3g bis 10g der Grundschicht in Kombination mit einer porösen Deckschicht (Auftragsmenge pro $m^2$ 5g bis 25g, vorzugsweise 10g bis 20g) gleiches Farbflüssigkeitsaufnahmevermögen erhalten, wie mit konventionellen Schichten, deren Auftragsmenge über 35 $g/m^2$ liegt (z.B. Agfa Selectjet oder Sihl GA Pre Press Spirit) Als Träger eignen sich Kunststofffolien, Metallfolien, Papiere, Kunststoff-Vliese, Naturfaser-Vliese, Gewebe und mehrschichtige Materialien aus Lagen gleicher oder verschiedener Materialien. Die Grundschicht kann direkt oder nach Oberflächenbehandlung mittels eines Primers auf den Träger aufgebracht werden.

Neben dem hohen Farbflüssigkeitsaufnahmevermögen zeigt die Grundschicht eine gute Alterungsbeständigkeit hinsichtlich z.B. des Farbflüssigkeitsaufnahmevermögens.

Ferner liegt es auch im Rahmen der Erfindung ein Farbaufnahmematerial mit mehr als einer Farbflüssigkeitsaufnahmeschicht auszustatten.

Die Erfindung wird durch folgende Beispiele näher erläutert. Diese Beispiele betreffen lediglich spezielle Ausführungsformen und sollen die Erfindung in keiner Weise beschränken.

Als Trägermaterial für die nachfolgend beschriebenen Beispiele wurde ein gestrichenes Papier oder eine Folie verwendet.

Die nachfolgend für Gelatine (20%) genannten Gewichtsteile beziehen sich auf 20% Gelatine in Wasser.

Die Bezeichnung "Propanol" gilt sowohl für Isopropanol als auch für n-Propanol. Mit beiden wurden gleiche Eigenschaften erhalten.

Alle Beispiele wurden mit einer Deckschicht einheitlicher Zusammensetzung, mit oder ohne Grundschicht, durchgeführt.

**Zusammensetzung der Deckschicht für alle Beispiele:**

| | |
|---|---|
| AlO(OH)-H2O (20 %)[1)] | 100 Gewichtsteile |
| Polyvinylalkohol[2)] | 25 Gewichtsteile |
| Zonyl FSN[3)] | 0.4 Gewichtsteile |

(fortgesetzt)

| | |
|---|---|
| Propylenglykol[4] | 20 Gewichtsteile |

[1] AlO(OH)-H2O (20%), Boehmit-Struktur (20% Dispersion in Wasser)
[2] Polyvinylalkohol, hochmolekular (8% in Wasser)
[3] Zonyl FSN ist ein Netzmittel, erhältlich von Dupont de Nemours
[4] Dowanol DPM bringt gleiche Ergebnisse wie Propylenglykol

***Beispiel 1, Vergleich* 1**

Zusammensetzung der Grundschicht

| | |
|---|---|
| Gelatine(20%) | 100 Gewichtsteile |
| Zonyl FSN | 0.6 Gewichtsteile |
| Wasser | 71.6 Gewichtsteile |
| Propylenglykol | 12 Gewichtsteile |
| Propanol | 36 Gewichtsteile |

***Beispiel 2, Vergleich 2***

| | |
|---|---|
| Gelatine(20%) | 100 Gewichtsteile |
| Zonyl FSN | 0.6 Gewichtsteile |
| Wasser | 78.6 Gewichtsteile |
| Propylenglykol | 19.8 Gewichtsteile |
| Propanol | 13.2 Gewichtsteile |
| Xama 7 (33% in Wasser) | 10.8 Gewichtsteile |

Xama 7 (33% in Wasser) ist ein Vernetzer, erhältlich von Flevo Chemie

***Beispiel 3, Vergleich 3***

| | |
|---|---|
| Gelatine (20%) | 100 Gewichtsteile |
| Zonyl FSN | 0.6 Gewichtsteile |
| Wasser | 60 Gewichtsteile |
| Propylenglykol | 12 Gewichtsteile |
| Propanol | 36 Gewichtsteile |
| Formaldehyd (8%) | 3.2 Gewichtsteile |

***Beispiel 4 (Erfindungsgemäss)***

| | |
|---|---|
| Gelatine (20%) | 100 Gewichtsteile |
| Zonyl FSN | 0.6 Gewichtsteile |
| Wasser | 51.6 Gewichtsteile |
| Propylenglykol | 12 Gewichtsteile |
| Propanol | 36 Gewichtsteile |
| Triazin, Natrium-Salz (8%) | 20 Gewichtsteile |

***Beispiel 5 (Erfindungsgemäss)***

| | |
|---|---|
| Gelatine (20%) | 100 Gewichtsteile |
| Zonyl FSN | 0.6 Gewichtsteile |

(fortgesetzt)

| | |
|---|---|
| Wasser | 100 Gewichtsteile |
| Propylenglykol | 12 Gewichtsteile |
| Propanol | 36 Gewichtsteile |
| 1,3,5-Triacryloyl-Hexahydrotriazin (12%) | 20 Gewichtsteile |

***Beispiel 6***

Ohne Grundschicht

Auf einen Träger wurde die obige Grundschicht in einer Menge, die einer Festoffmenge von 10 g/$m^2$ entspricht, mittels Tauchverfahren aufgetragen. Die Schicht wurde anschliessend im Trocknungskanal bei einem eingestellten Temperatur-Profil zwischen 50°C - 150°C innerhalb von 2 Minuten getrocknet. Nach demselben Verfahren wurde die Zusammensetzung der Deckschicht auf die Grundschicht in einer Menge, die einer Feststoffmenge von ca. 20 g/$m^2$ entspricht, aufgetragen.

**Durchgeführte Untersuchungen**

In den folgenden Versuchen wurde ein LFP-Tintenstrahldrucker HP 5000 mit handelsüblichen Tinten mit der Bezeichnung UV als Testgerät eingesetzt. Ein Bild mit verschiedenen Feldern in den Farben Schwarz (Summe von **C**yan, **M**agenta, **Y**ellow, Blac**k** = CMYK), Schwarz (CMY), Grün (CY), Cyan (C), Blau (CM), Magenta (M), Rot (MY) und Black (K) und mit unterschiedlich abgestuften Farbmengen (von 2% bis 100%) wurde auf die gemäss den Beispielen 1-7 hergestellten Muster aufgedruckt.

Der ***Schichtauftrag*** auf jedem Muster wurde gravimetrisch durch Abzug des Gewichtes des Rohträgers bestimmt .

Die ***Bildqualität*** wurde anhand der aufgedruckten Bilder eingeschätzt, indem die Schärfe von feinen Linien optisch ausgewertet wurde.

Der ***Farbverlauf*** wurde anhand der angrenzenden bedruckten Farbfelder optisch ausgewertet. Die Einstufung war:

stark = die Farben mischen sich stark ineinander

mittel = die Farben mischen sich etwas ineinander

ander

kein = die Farben mischen sich nicht ineinander.

Die ***Oberflächestruktur*** wurde am Mikroskop hinsichtlich Rissbildung untersucht.

Die ***Trocknung der Muster*** wurde ausgewertet anhand des Farbmengefelds der Farbe CYM des bedruckten Musters, die visuell als trocken identifiziert wurde.

Die ***optische Dichte*** der Muster wurde mit einem Dichtemessgerät der Fa. Gretag-Macbeth TD 904 bestimmt.

Die ***Wasserfestigkeit*** des Material wurde 24 Stunden nach Bedrucken ausgewertet, indem ein Wassertropfen (0.3 ml) auf jedes Farbfeld (Schwarz, Schwarz, Cyan, Gelb, Magenta, Rot, Blau und Grün) gegeben wurde. Nach 1 Minute wurde das liegende Wasser mit einem Wischtuch entfernt. Die Wasserfestigkeit wurde als sehr gut eingestuft, wenn die Farbfelder unberührt blieben d.h. keine Farbe abgewischt wurde.

| Bsp. | Auftrag Grundschicht [g/m²] | Auftrag Deckschicht [g/m²] | Bildqualität | Farbverlauf | Oberflächenstruktur | Trocknung % CYM | Optische Dichte | Wasserfestigkeit |
|---|---|---|---|---|---|---|---|---|
| 1 | 10 | 20 | schlecht | stark | grobe Risse | 75 | 0.16 | schlecht |
| 2 | 10 | 20 | sehr gut | kein | in Ordnung | 100 | 0.16 | sehr schlecht |
| 3 | 10 | 20 | schlecht | stark | in Ordnung | 75 | 0.15 | gut |
| ***4*** | ***10*** | ***20*** | ***sehr gut*** | ***kein*** | ***in Ordnung*** | ***100*** | ***0.14*** | ***sehr gut*** |
| ***5*** | ***10*** | ***20*** | ***gut*** | ***mittel*** | ***in Ordnung*** | ***80*** | ***0.14*** | ***sehr gut*** |
| 6 | 0 | 30 | mittel | mittel | in Ordnung | 78 | 0.18 | gut |

Man erkennt eindeutig, dass die mit dem erfindungsgemäss Vernetzer hergestellten Muster 4, 5 unter Berücksichtigung der Kriterien Bildqualität, Verlauf, Oberflächestruktur, Tintentrocknung, Wasserfestigkeit und optische Dichte bei niedrigerer Auftragmenge (10 g/$m^2$ Grundschicht, 20 g/$m^2$ Deckschicht) deutlich bessere Gesamteigenschaften im Vergleich mit den Referenzmustern 1-3 und 6 aufwiesen.

## Patentansprüche

1. Zusammensetzung für ein Farbaufnahmematerial umfassend

(i) mindestens 50 Gew.-% Gelatine, und gegebenenfalls die Differenz zu 100 Gew.-% eines anderen hydrophilen Materials ausgewählt aus einem oder mehreren Bindemittel(n) mit Hydroxylgruppen und/oder Carboxylgruppen und/oder Aminogruppen und/oder Estergruppen und/oder Ketogruppen und/oder Amidogruppen in Seitenketten,
(ii) mindestens einen Vernetzer der Formel (I)

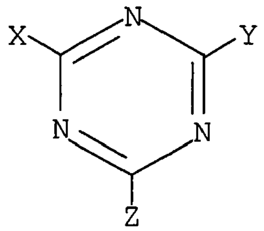

(I)

worin
X, Y, und Z unabhängig von einander Wasserstoff, einen Alkylrest, einen Phenylrest, einen Benzylrest, eine Carboxylgruppe, eine Alkoxygruppe, eine Amidogruppe, eine Aminogruppe, eine Carbonylgruppe, eine Alkoxycarbonylaminogruppe (-NH-COOR), ein Halogenid (insbesondere Cl, Br), oder -OM bedeuten, worin M ein Alkalimetall ist, insbesondere Na oder K,
und/oder
mindestens einen Vernetzer der Formel (II)

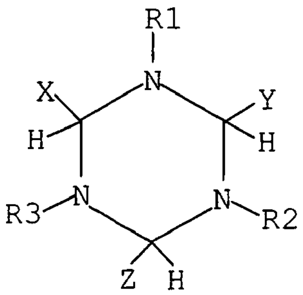

(II)

worin
X, Y, und Z unabhängig von einander Wasserstoff, einen Alkylrest, einen Phenylrest, einen Benzylrest, eine Carboxylgruppe, eine Alkoxygruppe, eine Amidogruppe, eine Aminogruppe, eine Carbonylgruppe, eine Alkoxycarbonylaminogruppe (-NH-COOR), ein Halogenid (insbesondere Cl, Br), oder -OM bedeuten, worin M ein Alkalimetall ist, insbesondere Na oder K, und worin
R1, R2, R3 unabhängig von einander einen Alkylrest, einen Phenylrest, einen Benzylrest, eine Carboxylgruppe, eine Carbonylgruppe, eine Amidogruppe, eine Aminogruppe oder eine Alkoxycarbonylaminogruppe bedeuten, und
(iii) Wasser.

2. Zusammensetzung gemäss Anspruch 1, **dadurch gekennzeichnet, dass** mindestens ein Vernetzer die Formel (I) hat, worin X=Y=Cl oder Br und Z=ONa und/oder OK.

3. Zusammensetzung gemäss Anspruch 1 oder 2, **dadurch gekennzeichnet, dass** mindestens ein Vernetzer die Formel (I) mit X=Y=Cl und Z=ONa hat.

4. Zusammensetzung gemäss einem der vorangehenden-Ansprüche, **dadurch gekennzeichnet, dass** mindestens ein Vernetzer die Formel (II) hat, worin X=Y=Z=H und R1=R2=R3=$-CO-C(CH_3)=CH_2$ oder X=Y=Z=H und R1=R2=R3=-CO-CH=CH2.

5. Zusammensetzung gemäss Anspruch 4, **dadurch gekennzeichnet, dass** mindestens ein Vernetzer die Formel (II) hat mit X=Y=Z=H und R1=R2=R3=$-CO-CH=CH_2$.

6. Zusammensetzung gemäss einem der vorangehenden Ansprüche, **dadurch gekennzeichnet, dass** die Gelatine mindestens 70 Gew.-%, speziell bevorzugt ca. 100 Gew.-% des Gesamtbindemittels ausmacht.

7. Zusammensetzung gemäss einem der vorangehenden Ansprüche, **dadurch gekennzeichnet, dass** die Gelatine unmodifizierte Gelatine und/oder modifizierte Gelatine ausgewählt aus der Gruppe umfassend acetylierte Gelatine, phthalatierte Gelatine, oxidierte Gelatine und Mischungen derselben ist, und dass weitere hydrophile Bindemittel eine Löslichkeit in Wasser bei 60°C von mind. 10 g Bindemittel pro 100 g Wasser, vorzugsweise mind. 20 g Bindemittel pro 100 g Wasser aufweisen.

8. Zusammensetzung gemäss einem der vorangehenden Ansprüche, **dadurch gekennzeichnet, dass** die Gelatine unmodifizierte Gelatine ist, insbesondere deionisierte, niedrigviskose Gelatine mit einer Viskosität von 1 bis 50 mPas, einem isoelektrischen Punkt von 5.0 bis 9.5 und einem pH von 4.5 bis 6.0.

9. Zusammensetzung gemäss einem der vorangehenden Ansprüche, **dadurch gekennzeichnet, dass** sie zusätzlich ein Lösungsmittel ausgewählt aus der Gruppe umfassend C1-C4-Alkohole, Glykole mit Siedepunkt <220°C, Glykolether mit Siedepunkten <220°C und Mischungen derselben enthält.

10. Zusammensetzung gemäss Anspruch 9, **dadurch gekennzeichnet, dass** sie als Lösungsmittel Mischungen von n-Propanol und/oder Isopropanol mit Propylenglykol oder Glykolether enthält.

11. Zusammensetzung gemäss einem der vorangehenden Ansprüche, **dadurch gekennzeichnet, dass** das Verhältnis von Wasser zu Alkohol und Glykol und/oder Glykolether im Bereich von 10:1 bis 1:1, vorzugsweise im Bereich von 8:1 bis 3:2, speziell bevorzugt im Bereich von 6:1 bis 2:1 liegt.

12. Zusammensetzung gemäss einem der vorangehenden Ansprüche, **dadurch gekennzeichnet, dass** das Verhältnis von Alkohol zu Glykol und/oder Glykolether im Bereich von 8:1 bis 1:2, vorzugsweise im Bereich von 6:1 bis 1:1, speziell bevorzugt im Bereich von 4:1 bis 2:1 liegt.

13. Zusammensetzung gemäss einem der vorangehenden Ansprüche, **dadurch gekennzeichnet, dass** sie weitere Bestandteile enthält, die ausgewählt sind aus Polymeren wie Latex und/oder Polyurethan (PUR), Netzmitteln, Farbstoffen, Fixierungsmitteln, weiteren Vernetzungsmitteln, organischen Pigmenten, anorganischen Pigmenten, Beizmitteln und beliebigen Kombinationen dieser weiteren Bestandteile.

14. Zusammensetzung gemäss einem der vorangehenden Ansprüche, **dadurch gekennzeichnet, dass** sie Feststoffe, insbesondere Bindemittel und gegebenenfalls Pigmente, in Gesamtmengen von ca. 1 bis 30 Gew.-%, vorzugsweise 3 bis 15 Gew.-%, speziell bevorzugt 5-12 Gew.-% und Wasser und Lösungsmittel in einer Menge von 99-70 Gew.-%, vorzugsweise 97-85 Gew.-% und speziell bevorzugt 5-12 Gew.-% enthält.

15. Zusammensetzung gemäss einem der vorangehenden Ansprüche, **dadurch gekennzeichnet, dass** sie Vernetzer in einer Menge von ca. 0.1 bis 400 mmol/100g Gelatine, vorzugsweise 1.0 bis 200 mmol/100g Gelatine, speziell bevorzugt 4.0 bis 200 mmol/100g Gelatine enthält.

16. Zusammensetzung gemäss einem der vorangehenden Ansprüche, **dadurch gekennzeichnet, dass** sie Vernetzer in Mengen von 0.04 bis 160 mmol/reaktive Gruppe des hydrophilen Bindemittels, vorzugsweise 0.4 bis 80 mmol/reaktive Gruppe und speziell bevorzugt 1.8 bis 40 mmol/reaktive Gruppe enthält.

**17.** Zusammensetzung gemäss einem der vorangehenden Ansprüche, **dadurch gekennzeichnet, dass** vom Vernetzer mindestens 80 mol-% erfindungsgemässe Vernetzer der Formel (I) und/oder (II) sind.

**18.** Verwendung einer Zusammensetzung gemäss einem der Ansprüche 1 bis 17 zur Herstellung einer Grundschicht unter einer sofort trocknenden tintenfixierenden Deckschicht, insbesondere einer porösen Aufnahmeschicht.

**19.** Herstellung einer Grundschicht für Farbaufnahmeschichten, **dadurch gekennzeichnet, dass** eine Zusammensetzung gemäss einem der Ansprüche 1 bis 17 auf einen Träger aufgebracht und in einem Trocknungskanal bei Temperaturen im Bereich von 50°C bis 200°C während 1 bis 4 Minuten vernetzt und getrocknet wird.

**20.** Aufnahmeschichten für Farbflüssigkeiten tragende Materialien, **dadurch gekennzeichnet, dass** sie eine Grundschicht aufweisen, die herstellbar ist nach dem Verfahren gemäss Anspruch 19.

**21.** Aufnahmeschichten für Farbflüssigkeiten tragende Materialien gemäss Anspruch 20, **dadurch gekennzeichnet, dass** sie für Anwendungen im Rahmen von Druckbildaufzeichnungsverfahren geeignet sind.

Europäisches Patentamt

# EUROPÄISCHER RECHERCHENBERICHT

Nummer der Anmeldung
EP 06 01 2809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/134092 A1 (M.TSUCHIYA ET AL.) 17. Juli 2003 (2003-07-17)<br>* Absätze [0002], [0015] - [0022], [0120], [0123], [0150]; Anspruch 1 * | 1-21 | INV.<br>B41M5/50<br>G03G7/00<br>C08L89/06 |
| X | EP 1 403 701 A (EASTMAN KODAK COMPANY) 31. März 2004 (2004-03-31)<br>* Absätze [0001], [0015] - [0018], [0031], [0039], [0054], [0066] *<br>* Ansprüche 1-3,6,8,9 * | 1-21 | |
| X | PATENT ABSTRACTS OF JAPAN<br>& JP 2000 122224 A (KONICA CORPORATION), 28. April 2000 (2000-04-28)<br>* Zusammenfassung * | 1-21 | |
| X | GB 2 118 732 A (FUJI PHOTO FILM COMPANY LIMITED) 2. November 1983 (1983-11-02)<br>* Seite 1, Zeile 48 - Zeile 60 *<br>* Seite 2, Zeile 11 - Zeile 17 *<br>* Seite 2, Zeile 60 - Seite 3, Zeile 12 *<br>* Ansprüche 1-7 * | 1-21 | |

RECHERCHIERTE SACHGEBIETE (IPC)

G03C
B41M
G03G
C08L
B41J

Der vorliegende Recherchenbericht wurde für alle Patentansprüche erstellt

1

| Recherchenort | Abschlußdatum der Recherche | Prüfer |
|---|---|---|
| Den Haag | 1. November 2006 | Bacon, Alan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 06 01 2809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2006

| Im Recherchenbericht angeführtes Patentdokument | Datum der Veröffentlichung | Mitglied(er) der Patentfamilie | Datum der Veröffentlichung |
|---|---|---|---|
| US 2003134092 A1 | 17-07-2003 | KEINE | |
| EP 1403701 A | 31-03-2004 | CN 1497340 A | 19-05-2004 |
| | | JP 2004118204 A | 15-04-2004 |
| | | US 2004063023 A1 | 01-04-2004 |
| JP 2000122224 A | 28-04-2000 | KEINE | |
| GB 2118732 A | 02-11-1983 | DE 3314254 A1 | 27-10-1983 |
| | | JP 58184144 A | 27-10-1983 |
| | | US 4547445 A | 15-10-1985 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1060901 A2
- EP 1295923 B1
- EP 1295923 A